# EUROPÄISCHE PATENTSCHRIFT

(11) **EP 0 809 345 B1**
(45) Veröffentlichungstag und Bekanntmachung des Hinweises auf die Patenterteilung: **20.09.2000**
(21) Anmeldenummer: 97106967.9
(22) Anmeldetag: 25.04.1997
(51) Int. Cl.: H02K 24/00

(54) **Verfahren zur Herstellung einer Rotoreinheit für einen Drehmelder mit Ringübertrager sowie Spulenkörper zur Verwendung bei diesem Verfahren**
Method of manufacturing a rotor unit for an angular-position indicator with rotary transformer and coil bobbin to be used in this method
Méthode de fabrication d'un rotor pour indicateur de position angulaire avec transformateur rotatif et corps de bobine à utiliser dans ce procédé

(30) Priorität: 20.05.1996 DE 19620183
(43) Veröffentlichungstag der Anmeldung: 26.11.1997
(73) Patentinhaber: TYCO Electronics Logistics AG, 9323 Steinach (CH)
(72) Erfinder: Meiler, Reinhold, 85622 Feldkirchen (DE); Stevens, Dirk, 82194 Gröbenzell (DE)
(74) Vertreter: Heinz-Schäfer, Marion

(56) Entgegenhaltungen:
- EP-A- 0 511 082
- GB-A- 1 006 507
- US-A- 5 023 734
- PATENT ABSTRACTS OF JAPAN vol. 009, no. 031 (E-295), 9.Februar 1985 & JP 59 175369 A (MITSUBISHI JUKOGYO KK), 4.Oktober 1984,

## Beschreibung

Die Erfindung betrifft ein Verfahren zur Herstellung einer Rotoreinheit für einen Drehmelder mit Ringübertrager, wobei ein mit einem isolierenden Spulenkörper versehener übertragerkern mit mindestens einer Übertragerwicklung bewickelt wird, wobei ferner ein mit Nuten versehenes Rotor-Blechpaket mit mindestens einer Drehmelderwicklung bewickelt wird und wobei der Übertragerkern und das Rotorblechpaket auf einer gemeinsamen Welle angeordnet und ihre Wicklungsenden miteinander verbunden werden. Außerdem betrifft die Erfindung einen Spulenkörper zur Verwendung bei diesem Verfahren.

Bei schleifringlosen Drehmeldern mit an sich bekanntem Aufbau (EP 0 511 082 A1) ist es üblich, daß die jeweiligen Wicklungen für den Ringübertrager einerseits und den eigentlichen Drehmelderrotor andererseits in Einzeleinheiten getrennt gewickelt und in einem spätere Montagegang zu der vollständigen Rotoreinheit der oben genannten Art zusammengesetzt werden. Dabei müssen jeweils Anfang und Ende einer jeden Wicklung zunächst herausgeführt und vor der Weiterverarbeitung gesichert werden. An der zusammengebauten Rotoreinheit müssen die Wicklungsenden dann wieder gelöst, einander richtig zugeordnet und miteinander verbunden werden.

Ziel der vorliegenden Erfindung ist es, ein Verfahren anzugeben, mit dem alle Wicklungen der Rotoreinheit in einem durchgehenden Arbeitsgang bewickelt werden können, um damit einen einfacheren und schnelleren Fertigungsablauf zu erreichen.

Erfindungsgemäß wird dieses Ziel mit einem Verfahren der eingangs genannten Art dadurch erreicht, daß der Übertragerkern und das Rotor-Blechpaket bereits vor dem Wickeln auf der gemeinsamen Welle angeordnet werden, daß auf dem Übertragerkern ein Spulenkörper mit mindestens zwei gegeneinander versetzten, über die Umfangskontur des Ringübertragers radial vorstehenden Anwickelstützen angeordnet wird, daß auf den Anwikkelstützen die Wicklungsenden der Übertragerwicklung während des Wickelns der Drehmelderwicklung befestigt sind und daß die Anwickelstützen danach aus dem über die Umfangskontur des Ringübertragers vorstehenden Bereich entfernt werden.

Mit dem erfindungsgemäßen Verfahren werden also sowohl die Übertragerwicklung als auch die Rotorwicklung(en) fortlaufend auf den bereits vormontierten Eisenkernen der Rotoreinheit gewickelt, was aber nur dadurch möglich ist, daß die radial vorstehenden Anwickelstützen verwendet werden. Dies erschien bisher unmöglich, da in der Statorbohrung des Drehmelders derartig vorstehende Anwickelstützen zu wenig Platz haben, also der Rotor mit diesen Anwickelstützen nicht eingeschoben werden könnte. Erfindungsgemäß dienen diese Anwickelstützen auch nur als vorübergehende Zwischenbefestigung für die Wicklungsenden von Übertrager- und Rotorwicklung und sie werden entsprechend nach der Fertigstellung der Wicklungen entfernt, soweit sie über den zulässigen Umfang der Rotoreinheit vorstehen. Dies kann entweder vor der endgültigen Verbindung der verschiedenen Wicklungsenden der Übertragerwicklung und der Rotorwicklungen oder auch nach diesem Verbinden geschehen.

Die erfindungsgemäß verwendeten Anwickelstützen können in einer Ausführungsmöglichkeit als Drahtstifte in einem seitlich an einem Außenflansch des Spulenkörpers angeformten Ansatz, beispielsweise durch Einpressen, verankert werden. In diesem Fall ist es vorteilhaft, wenn nach den Wickelvorgängen jeweils der überstehende Abschnitt des Drahtstiftes in den Bereich innerhalb der Umfangskontur der Rotoreinheit zurückgebogen wird.

In einer anderen bevorzugten Ausführungsform sind die Anwikkelstützen jedoch in Form von Isolierstoff-Zapfen auf dem Umfang eines Spulenkörperflansches angeformt, und sie werden nach den Wickelvorgängen abgetrennt. Bei dieser Vorgangsweise erhält man den zusätzlichen Vorteil, daß keine zusätzlichen Masseelemente am Rotor verbleiben, die unter Umständen die Rotationssymmetrie stören könnten.

Ein Spulenkörper zur Verwendung bei dem erfindungsgemäßen Verfahren ist derart gestaltet, daß er als Isolierstoffring mit zwei umlaufenden Flanschen einen U-förmigen Querschnitt besitzt und daß an einem der Flansche mindestens zwei Anwickelstützen in Form von Zapfen radial nach außen vorstehend und im Winkel gegeneinander versetzt angeformt sind. Um diesen Spulenkörper auf einem Übertragerkern mit ebenfalls U-förmigem Querschnitt montieren zu können, besteht er zweckmäßigerweise aus zwei halbkreisförmigen Ringsegmenten, wobei die beiden Zapfen bevorzugt an einem der Ringsegmente angeformt sind.

Die Erfindung wird nachfolgend an Ausführungsbeispielen anhand der Zeichnung näher erläutert. Es zeigt
Figur 1 eine erfindungsgemäß gestaltete Rotoreinheit für einen Drehmelder in perspektivischer Ansicht,
Figur 2 einen aus zwei Ringsegmenten bestehenden Spulenkörper für den Übertragerteil der Rotoreinheit von Figur 1,
Figur 3 die Rotoreinheit von Figur 1 in einer Draufsicht,
Figur 4 eine ausschnittsweise Darstellung eines Spulenkörpersegmentes mit einer gegenüber Figur 2 abgewandelten Gestaltung von Anwickelstützen in Seitenansicht und
Figur 5 eine Draufsicht V auf das Spulenkörpersegment von Figur 4.

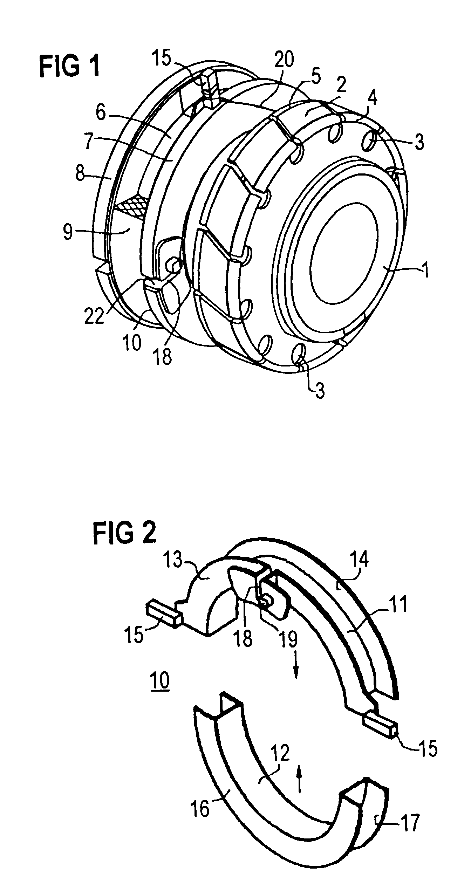

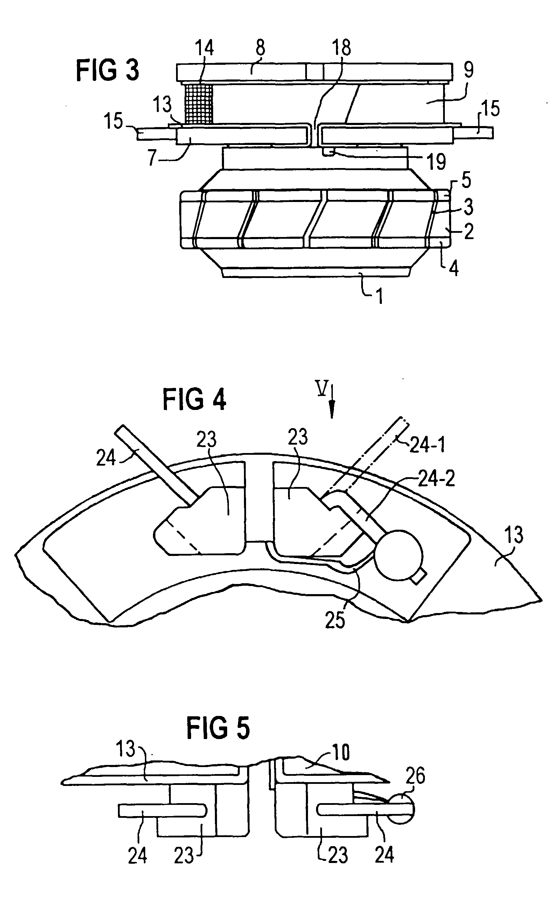

Die in den Figuren 1 und 3 gezeigte Rotoreinheit besitzt eine Rotorwelle 1, auf der ein Rotorblechpaket 2 mit einer vorgegebenen Anzahl von schräg geführten Nuten 3 angeordnet ist. Dieses Blechpaket wird an beiden Stirnseiten von Isolierflanschen 4 und 5 begrenzt. Weiterhin ist auf der Rotorwelle 1 axial versetzt zu dem Blechpaket 2 ein ringförmiger übertragerkern 6 mit U-förmigem Querschnitt angeordnet, der zwischen seinen Eisenflanschen 7 und 8 eine Übertragerwicklung 9 aufnimmt.

Zur Isolierung der Übertragerwicklung 9 gegenüber dem aus Eisen bestehenden Übertragerkern 6 mit den Flanschen 7 und 8 ist ein zweiteiliger Spulenkörper 10 vorgesehen, der in Figur 2 als Einzelteil gezeigt ist. Danach besteht der Spulenkörper 10 aus zwei Ringsegmenten 11 und 12 von jeweils U-förmigem Querschnitt. An dem ersten bzw. oben gezeichneten Ringsegment 11 mit den beiden Flanschen 13 und 14 sind zwei Zapfen 15 als Anwickelstützen angeformt, die einander gegenüberliegen bzw. um annähernd 180° gegeneinander versetzt sind. Das andere Ringsegment 12 mit seinen Flanschen 16 und 17 ist dementsprechend einfacher herzustellen. An dem Ringsegment 11 ist im Flansch 13 außerdem ein Radialschlitz 18 eingeformt, durch den der Drahtanfang beim Beginn des Wickelns zu den unteren Lagen am Boden des U-förmigen Spulenkörpers eingeführt werden kann. Um das Einführen zusätzlich zu erleichtern, ist an einem Vorsprung des Flansches 13 neben dem Radialschlitz 18 ein Haken 19 zum Einfädeln des Drahtes vorgesehen.

Bei der Herstellung der Rotoreinheit werden zunächst das Blechpaket 2 mit den Isolierflanschen 4 und 5 sowie der Übertragerkern 6 auf der Rotorwelle 1 befestigt. Dann wird der Spulenkörper 10 in Form der Ringsegmente 11 und 12 in den Übertragerkern 6 eingesetzt. Die bis dahin montierte Rotoreinheit wird in eine Wickelvorrichtung gegeben, wo zunächst die Übertragerwicklung 9 gewickelt wird. Zu diesem Zweck wird der Drahtanfang zunächst an einen der Zapfen 15 gewickelt und von dort mit seinem Abschnitt 20 zunächst neben dem Flansch 7 mit etwa einer halben Drehung der Rotoreinheit um die Rotorwelle geschlungen, bis er an dem Haken 19 gefangen und durch den Schlitz 18 des Spulenkörperflansches 13 sowie innerhalb eines Schlitzes 22 des Eisenflansches 7 in den Wickelraum gelangt, wo dann die Übertragerwicklung in der vorgesehenen Weise erzeugt wird. Nach Beendigung dieses Wikkelvorgangs wird das Wicklungsende wieder durch einen Schlitz 22 bzw. 18 herausgeführt und an dem zweiten Zapfen 15 angewickelt. Von da an kann dann der Draht zum Blechpaket 2 geführt werden, wo in den Nuten 3 die Drehmelder-Rotorwicklungen erzeugt werden. Es kann aber für diese Rotorwicklungen auch ein anderer Draht verwendet werden. Wenn dann alle Wicklungen auf der Rotoreinheit fertig gewickelt sind, wird die Übertragerwicklung 9 in der vorgegebenen Weise mit der oder den Rotorwicklungen im Blechpaket 2 verschaltet, also beispielsweise verlötet. Die Zapfen 15 werden vor oder nach diesem Verschaltvorgang vom Umfang des Spulenkörperflansches 13 abgetrennt, so daß keine Teile mehr über den Umfangsrand hinausstehen.

Die erfindungsgemäße Gestaltung hat den Vorteil, daß auch Rotorpakete mit kleineren Abmessungen gewickelt werden können, da für die Wickeldrahtführung Mindestabstände zwischen Rotor und Übertragerteil erforderlich sind.

In den Figuren 4 und 5 ist noch eine weitere Ausführungsmöglichkeit gezeigt. In diesem Fall besitzt der Spulenkörperflansch 13 seitliche Ansätze 23, in welche Anwickelstützen in Form von Stiften 24 winkelig zueinander eingepreßt sind. An diese Stifte 24 wird der Wickeldraht 25 angelötet (Lötpunkt 26), wobei die Stifte 24 am Fertigteil nach innen umgebogen werden, so daß sie nicht mehr über den Umfang des Spulenkörpers 10 vorstehen. In Figur 4 sind diese zwei Fertigungsphasen dadurch angedeutet, daß die zwei Positionen der Stifte während des Wickelns mit 24-1 und nach dem Wickeln mit 24-2 bezeichnet sind.

## Patentansprüche

1. Verfahren zur Herstellung einer Rotoreinheit für einen Drehmelder mit Ringübertrager, wobei ein mit einem isolierenden Spulenkörper (10) versehener Übertragerkern (6,7,8) mit mindestens einer Übertragerwicklung (9) bewickelt wird, wobei ferner ein mit Nuten (3) versehenes Rotor-Blechpaket (2) mit mindestens einer Drehmelderwicklung bewickelt wird und wobei der Übertragerkern (6) und das Rotor-Blechpaket (2) auf einer gemeinsamen Welle (1) angeordnet und ihre Wicklungsenden miteinander verbunden werden,
**dadurch gekennzeichnet**, daß der Übertragerkern (6,7,8) und das Rotor-Blechpaket (2) bereits vor dem Wickeln auf der gemeinsamen Welle (1) angeordnet werden, daß auf dem Übertragerkern (6,7,8) ein Spulenkörper (10) mit mindestens zwei gegeneinander versetzten, über die Umfangskontur des Ringübertragers radial vorstehenden Anwickelstützen (15;24) angeordnet wird, daß auf den Anwickelstützen (15;24) die Wicklungsenden der Übertragerwicklung (9) während des Wickelns der Drehmelderwicklung befestigt sind und daß die Anwickelstützen (15;24) danach aus dem über die Umfangskontur des Ringübertragers (7,8,9) vorstehenden Bereich entfernt werden.

2. Verfahren nach Anspruch 1,
**dadurch gekennzeichnet**, daß die Anwikkelstützen jeweils als Drahtstifte (24) in einem seitlich an einem Außenflansch (13) des Spulenkörpers angeformten Ansatz (23) verankert und nach den Wickelvorgängen in den Bereich innerhalb der Umfangskontur des Ringübertragers (7,8,9) gebogen werden.

3. Verfahren nach Anspruch 1,
**dadurch gekennzeichnet**, daß die Anwikkelstützen als Isolierstoff-Zapfen (15) auf dem Umfang eines Spulenkörperflansches (13) angeformt und nach den Wickelvorgängen abgetrennt werden.

4. Spulenkörper zur Verwendung bei dem Verfahren nach Anspruch 1,
**dadurch gekennzeichnet**, daß er als Isolierstoffring (11,12) mit zwei umlaufenden Flanschen (13,14,16,17) einen U-förmigen Querschnitt besitzt und daß an einem der Flansche (13) mindestens zwei Anwickelstützen in Form von Zapfen (15) radial nach außen vorstehend, im Winkel gegeneinander versetzt, angeformt sind.

5. Spulenkörper nach Anspruch 4,
**dadurch gekennzeichnet**, daß er aus zwei halbkreisförmigen Ringsegmenten (11,12) besteht und daß die beiden Zapfen (15) an einem der Ringsegmente (11) angeordnet sind.

6. Spulenkörper nach Anspruch 4 oder 5,
**dadurch gekennzeichnet**, daß der die Zapfen (15) tragende Flansch (13) versetzt zu den Zapfen mindestens einen Radialschlitz (18) zur Durchführung der Wicklungsenden aufweist.

7. Spulenkörper nach Anspruch 6,
**dadurch gekennzeichnet**, daß neben dem Radialschlitz (18) an dem Spulenflansch ein Haken (19) zum Einfädeln des Wicklungsdrahtes angeformt ist.

## Claims

1. Method for producing a rotor unit for a rotary resolver with a ring transformer, a transformer core (6,7,8) provided with an insulating coil former (10) being wound with at least one transformer winding (9), a rotor laminated core (2) provided with slots (3) further being wound with at least one rotary resolver winding, and the transformer core (6) and the rotor laminated core (2) being arranged on a common shaft (1) and their winding ends being interconnected, characterized in that the transformer core (6,7,8) and the rotor laminated core (3) are already arranged on the common shaft (1) before being wound, in that a coil former (10) with at least two mutually offset winding-on supports (15;24) projecting radially over the peripheral contour of the ring transformer is arranged on the transformer core (6, 7, 8), in that the winding ends of the transformer winding (9) are fastened on the winding-on supports (15;24) during the winding of the rotary resolver winding, and in that the winding-on supports (15;24) are removed thereafter from the region projecting over the peripheral- contour of the ring transformer (7,8,9).

2. Method according to Claim 1, characterized in that the winding-on supports are anchored in each case as wire pins (24) in a projection (23) integrally formed on the side of an outer flange (13) of the core former, and are bent after the winding operations into the region inside the peripheral contour of the ring transformer (7,8,9).

3. Method according to Claim 1, characterized in that the winding-on supports are integrally formed as insulation pins (15) on the periphery of a coil former flange (13), and are severed after the winding operations.

4. Coil former for use in the method according to Claim 1, characterized in that it has a U-shaped cross section as an insulation ring (11,12) with two peripheral flanges (13,14,16,17), and in that on one of the flanges (13) at least two winding-on supports are integrally formed as pins (15) in a fashion projecting radially outwards and at an angle offset from one another.

5. Coil former according to Claim 4, characterized in that it comprises two semicircular ring segments (11,12), and in that the two pins (15) are arranged on one of the ring segments (11).

6. Coil former according to Claim 4 or 5, characterized in that the flange (13) bearing the pins (15) has at least one radial slot (18), offset relative to the pins, for guiding through the winding ends.

7. Coil former according to Claim 6, characterized in that in addition to the radial slot (18) a hook (19) is integrally formed on the coil flange for the purpose of threading in the winding wire.

## Revendications

1. Procédé de fabrication d'un rotor pour un indicateur de position angulaire avec transformateur rotatif, un noyau du transformateur (6, 7, 8) muni d'un corps de bobine (10) isolant étant enroulé avec au moins un enroulement de transformateur (9), un empilage de tôles rotorique (2) muni d'encoches (3) avec au moins un enroulement d'indicateur de position angulaire étant en outre enroulé et le noyau du transformateur (6) et l'empilage de tôles rotorique (2) étant disposés sur un arbre commun (1) et les extrémités de leurs enroulements étant reliées l'une avec l'autre
**caractérisé en ce que**
le noyau du transformateur (6, 7, 8) et l'empilage de tôles rotorique (2) sont disposés sur l'arbre commun (1) déjà avant l'enroulement, en ce que, sur le noyau du transformateur (6, 7, 8) est disposé un corps de bobine (10) avec au moins deux appuis d'enroulement (15; 24) décalés l'un par rapport à l'autre et saillant de manière radiale sur le contour périphérique du transformateur rotatif, en ce que les extrémités d'enroulement de l'enroulement de transformateur (9) sont attachées aux appuis d'enroulement (15; 24) pendant l'enroulement de l'enroulement de l'indicateur de position angulaire, et en ce que les appuis d'enroulement (15; 24) sont ensuite enlevés de la zone saillant sur le contour périphérique du transformateur rotatif (7, 8, 9).

2. Procédé selon la revendication 1, **caractérisé en ce que** les appuis d'enroulement sont ancrés à chaque fois sous la forme de pointes (24) dans un rebord (23) formé latéralement sur une bride extérieure (13) du corps de bobine et en ce qu'après les opérations d'enroulement, ils sont recourbés dans la zone à l'intérieur du contour périphérique du transformateur rotatif (7, 8, 9).

3. Procédé selon la revendication 1, **caractérisé en ce que** les appuis d'enroulement sont formés en pivots en matière isolante (15) sur la périphérie d'une bride de corps de bobine (13), et sont coupés après les opérations d'enroulement.

4. Corps de bobine à utiliser dans le procédé selon la revendication 1, **caractérisé en ce que**, sous forme d'anneau en matière isolante (11, 12) avec deux brides périphériques (13, 14, 16, 17), il possède une section en U, et en ce que, sur une des brides (13), au moins deux appuis d'enroulement sous forme de pivots (15) sont formés de manière à saillir radialement vers l'extérieur et à former un angle décalé l'un par rapport à l'autre.

5. Corps de bobine selon la revendication 4, **caractérisé en ce qu'**il est constitué de deux segments annulaires semi-circulaires (11, 12) et en ce que les deux pivots (15) sont disposés sur un des segments annulaires (11).

6. Corps de bobine selon la revendication 4 ou 5, **caractérisé en ce que** la bride (13) portant les pivots (15) présente, décalée par rapport aux pivots, au moins une fente radiale (18) pour le passage des extrémités d'enroulement.

7. Corps de bobine selon la revendication 6, **caractérisé en ce qu'**à côté de la fente radiale (18), un crochet (19) est formé sur la bride de bobine pour enfiler le fil d'enroulement.
